# EUROPEAN PATENT SPECIFICATION

(11) **EP 0 381 085 B1**
(45) Date of publication and mention of the grant of the patent: **26.05.1993**
(21) Application number: 90101627.9
(22) Date of filing: 27.01.1990
(51) Int. Cl.: A01F 15/07

(54) **Machine for forming cylindrical bales of crop**
Rundballenpresse
Machines pour rouler des balles rondes

(30) Priority: 30.01.1989 GB 8901957
(43) Date of publication of application: 08.08.1990
(73) Proprietor: DEERE & COMPANY, Moline, Illinois 61265 (US)
(72) Inventor: Viaud, Jean, F-57200 Sarreguemines (FR); Pfrimmer, Ernest, F-57520 Roulhing (FR)
(74) Representative: Feldmann, Bernhard

(56) References cited:
- GB-A- 2 169 551
- US-A- 4 198 804

## Description

This invention relates to a machine for forming cylindrical bales of crop having a baling chamber, a pick-up for the crop, and a feeder fork mechanism for receiving the crop from the pick-up and delivering it to the baling chamber, the feeder fork mechanism having: crop supporting strippers arranged side-by-side; and crop advancing tines rotatably received on a drivable and rotatable crank and pivotally connected to a pivot arm rotatably received on a shaft for a crop advancing movement from a position adjacent the pick-up to a position adjacent the the baling chamber inlet in which a crop engaging part of the tine extends outwardly between the strippers and for a return movement in which the tine is moved inwardly of the strippers.

Machines, towed by a tractor, for forming large cylindrical bales of hay (so called "round" balers) are well known. As the machine advances, the crop is removed from a windrow by a pick-up mechanism and delivered rearwardly to a baling chamber where it is rolled into a bale between sets of oppositely moving belts, the growing bale rotating about a horizontal axis and the baling chamber expanding with the bale. The belts are trained over rolls which extend laterally of the machine and most of which are journalled at either end in the sides of the machine.

In one conventional baler (GB-A-2 169 551) a pressing member is arranged between the pick-up and the baling chamber. It comprises two pairs of stub shafts disposed one behind the other. The inner ends of each pair of stub shafts are rigidly secured to crank webs which extend at right angles to the stub shafts and one end of each crank web is rigidly secured to a crank pin extending parallel to the stub shafts. The inner ends of the crank pins are rigidly secured to central crank webs which are interconnected by further crank pins located on the other side of the axis of the respective stub shafts. The fore-and-aft spaced crank pins carry pressing means in the form of continuous bottom plates with rows of upstanding tines. The bottom plates of all of the pressing means are fastened to bearings which allow the pressing means to pivot relatively to the associated crank pins. The axis of the stub shafts and those of the crank pins constitute the corners of parallelograms and consequently, when one of the stub shafts is driven, the tines of the pressing means will invariably remain parallel to themselves while moving trough a closed path.

In the conventional machine considered in the opening paragraphe (US-A-4 198 804) a feeder fork mechanism is arranged between the pick-up and the baling chamber in order to advance the crop. The feeder fork mechanism has crop supporting strippers, disposed side-by-side in alignment with similar strippers of the pick-up, and crop advancing tines which move in a cycle to extend outwardly between the feeder fork strippers, to push the crop rearwardly toward the baling chamber, and finally to withdraw below the strippers before the cycle starts again. The tines are all distributed in a single row across the input area of the baling chamber and each tine is connected to a bell crank, with all the bell cranks being mounted on a drivable shaft. Each tine is also pivoted with its end opposite to the crop engaging part to an arm which is pivoted to the machine frame.

Whilst such a feeder fork mechanism works well in general, in some crop conditions the crop can accumulate too greatly on the strippers during the withdrawal period in the cycle of the tines. This can lead to blockage and to vibration of the feeder fork when the tines next engage the crop. It is sometimes necessary to reduce the speed of progress of the machine to reduce these problems. Brittle straw is particularly prone to give rise to blockage as it tends to break into small pieces which are less easily drawn by the belts and growing bale into the baling chamber.

The present invention overcomes or reduces these difficulties.

According to the present invention the crank is a crankshaft with at least three throws, and each throw rotatably receives a group of tines, each group of tines is rigidly attached to a tube rotatably received on the crank pins, and each tube is rigidly attached to a second arm pivotally connected to the pivot arm.

Since the shaft is a crankshaft and the tines are mounted on its crank pins, a portion of the crop is advanced as each crank pin carries the tines mounted thereon through the operative crop-engaging part of the tine cycle so build-up of crop is reduced.

Preferably each crank pin has at least three tines thereon.

For a simple arrangement providing smooth operation the crank pins are preferably disposed in substantially the same plane.

Embodiments of the invention will now be described with reference to the accompanying diagrammatic drawings in which:
Figure 1 is an elevational view of the right hand side (considered when facing the direction of advancement) of a baling machine for forming large cylindrical bales of crop, e.g. straw, showing in broken lines the disposition of transverse rolls and of belts trained round the rolls within the machine;
Figure 2 is an elevational view similar to Figure 1, but with the right hand side of the machine removed;
Figure 3 is a detail view from the right of the pick-up and feeder fork mechanism shown in Figures 1 and 2;
Figure 4 is a perspective view looking from the front right of the pick-up and feeder fork mechanism; and
Figure 5 is a perspective view similar to Figure 4, but of a different feeder fork mechanism.

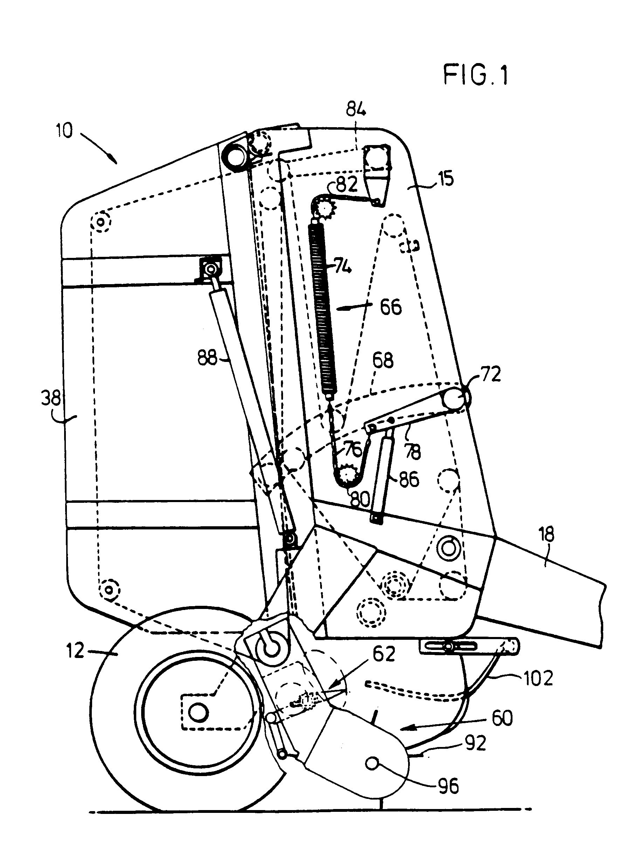

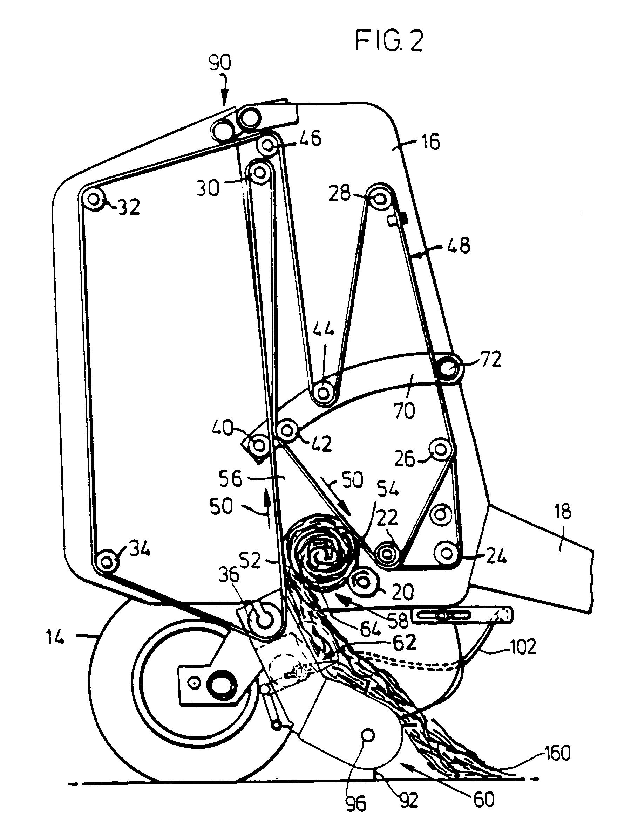

In the drawings (and particularly in Figures 1 and 2), the machine includes a main frame 10 mounted on a pair of wheels 12, 14. The main frame 10 has a pair of upright, opposite, fore-and-aft extending right and left side walls 15, 16 connected by transverse beams. A draft tongue 18 is rigid with a cross beam (not shown) at the front of the frame 10 and extends forwardly for attaching the baler to a tractor (not shown) which draws the machine.

A plurality of lateral rolls, shown in broken lines in Figure 1 and in full lines in Figure 2, extends over the width of the machine. One set of rolls 20, 22, 24, 26, 28, 30 is journalled in a forward fixed portion of either side wall, whilst a further set constituted by rolls 32, 34, 36 is journalled in a rearward swingable gate portion 38 of the side walls. There is also a pair of chamber restricting rolls 40, 42 and take-up and tensioning rolls 44, 46.

Six rubber belts 48 are trained side-by-side over the rolls, with the exception of the roll 20 which acts as a stripper roll, to provide the configuration shown in Figures 1 and 2 and they move in the direction indicated by arrows 50, the stripper roll 20 being driven anti-clockwise as viewed in the two Figures. However, as shown in Figure 2, alternate belts only are trained over the lower foremost roll 24, whilst the remaining belts by-pass the roll 24 and run directly between the roll 22, which is at the same horizontal level as the roll 24, and the roll 26 above. This creates, as explained and claimed in EP-A-0070537, a staggered array of belts affording the release of stray crop through gaps, formed as a result of the staggering, between neighbouring belts. Upwardly extending runs 52, 54 of the belts 48 provide with the side walls a bale-forming chamber 56 which has an inlet 58 for crop received from a pick-up 60 and feeder fork mechanism 62 beneath the inlet.

In order to accomodate the increasing diameter of a growing bale core 64 in the bale-forming chamber 56, the size of the chamber must also increase and a belt take-up and tensioning mechanism 66 is provided for this purpose at either side of the machine. These mechanisms include: a pair of arms 68, 70 which are mounted on a horizontal transverse pivot shaft 72 at the forward end of the main frame 10; the take-up and tensioning roll 44 which is supported at either end at an intermediate location on the arms 68, 70; and the pair of chamber restricting rolls 40, 42 supported at the free end of the arms. The arms 68, 70 are biased in an anti-clockwise direction by a pair of springs one on either side of the main frame 10 of which just the right hand spring 74 is shown and only its arrangement will be described, the other being similar. The spring 74 acts through a chain 76, at its lower end, on a bias arm 78 connected rigidly to the pivot shaft 72, the chain 76 being trained over a sprocket 80. At its upper end a further chain 82 similarly connects the spring 74 to one end of a bell crank 84, and the other end of the bell crank bears one end of the take-up and tensioning roll 46. The bias arm 78 is also restrained by a piston and cylinder unit 86 pivotally connected at one end to the free end of the bias arm 78 and at the other to the associated right hand side wall 15 of the main frame 10. A similar arrangement is provided on the left hand side of the machine so that, for example, the roll 46 is carried by bell cranks on either side.

The rear gate portion 38 is movable by a pair of upwardly extending hydraulic piston and cylinder units on either side of the main frame 10 of which only a right hand unit 88 is shown which is pivotally connected at its lower end to the forward fixed portion of the side wall 15 and at its upper end to the gate portion 38 which is swingable upwardly and downwardly about a pivot arrangement 90 at its upper forward region.

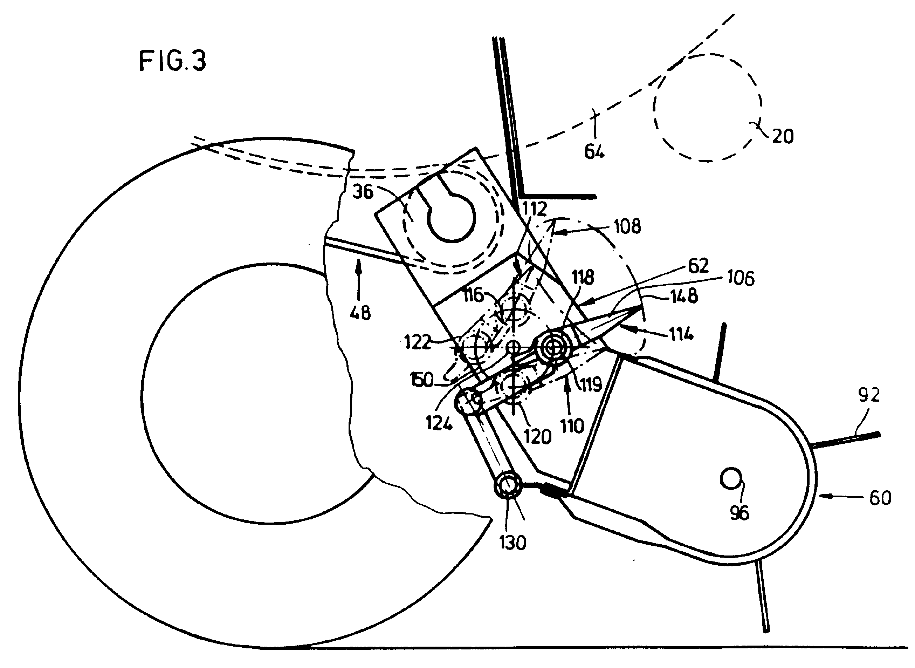

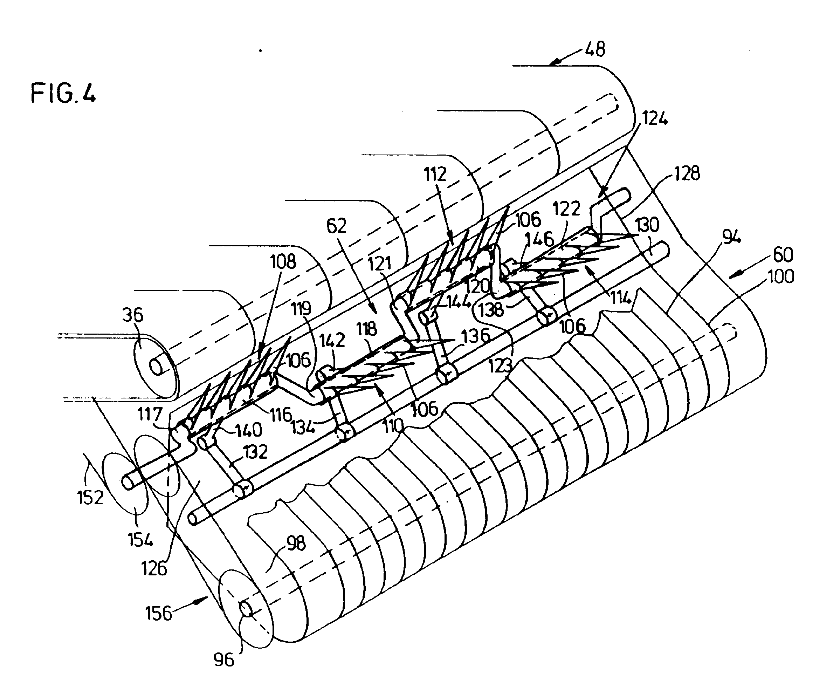

The pick-up 60 extends rearwardly and upwardly at a small angle and is conventional in that it has rotating teeth 92 (shown in Figure 3, but omitted from Figure 4 which is highly diagrammatic) which extend between neighbouring strippers 94 and which are mounted on a driven shaft 96 journalled in right and left pick-up plates 98, 100 with crop compressors 102 overhead.

The feeder fork mechanism 62 is disposed at the rearward downstream end of the pick-up 60, is angled upwardly more steeply, and terminates at the roll 36 at the inlet 58 of the baling chamber 56. This mechanism 62 has strippers which are aligned with the pick-up strippers 94. Crop advancing tines 106 are arranged to extend between the strippers. The tines 106 are rigidly attached in four groups of five 108, 110, 112, 114 to four tubes 116, 118, 120, 122 respectively rotatably received on four crank pins 117, 119, 121, 123 of the crankshaft 124 which is journalled in right and left side plates 126, 128 of the feeder fork mechanism 62. If desired, four tines or more tines than five can be used in each group. Furthermore, fewer or more than four crank pins can be employed each with a group of tines.

A shaft 130 is disposed below the crankshaft 124 and arms 132, 134, 136, 138 are rotatably mounted on it at intervals along its length corresponding to the tubes 116, 118, 120, 122 and are connected to the respective tubes via arms 140, 142, 144, 146 which at one end are pivotally connected via bushings to the arms 132, 134, 136, 138 and at the other are rigidly attached to the tubes 116, 118, 120, 122. In this way, when the crankshaft 124 is turned, the outer ends of the tines 106 trace out a geometric path 148. For clarity, in Figure 3 only one tine group 114 is shown in full line whilst the remaining groups 108, 110, 112 are indicated just in broken lines. When viewed in Figure 3 the crank tubes 116, 118, 120, 122 are disposed on a geometric circle 150 at angular intervals one to the next of 90°.

A chain 152 from the main drive (not shown) of the machine transmits drive to the crankshaft 124, via a sprocket 154, and in turn drive is transmitted thence, also by a chain and sprocket arrangement 156, to the pick-up shaft 96.

In operation, crop, e.g. straw, lying in a windrow 160 is lifted and conveyed to the baling chamber 56, by the pick-up 60 and feeder fork mechanism 62, where the oppositely moving runs 52, 54 of the belts 48, aided by the stripper roll 20, cause the crop to turn clockwise (as viewed in Figures 1 and 2) to form the bale core 64 which is of increasing size and which eventually overcomes the tension in the belts 48 brought about by the tensioning mechanisms, and the arms 68, 70 consequently swing upwardly and thus the chamber 56 increases in size to accomodate as necessary the bale core 64 as its diameter grows.

Thus, in more detail, the feeder fork mechanism 62 receives crop from the pick-up 60 and each group 108, 112, 110, 114 of tines acts in that sequence on the crop to advance it to the inlet 58 of the baling chamber 56. Feeding is, in this way, more uniform than with a conventional feeder fork mechanism with all the tines simply arranged in line on a straight rotating shaft which acts only intermittently on the accumulating crop. Crop is prevented in the present case from accumulating across the width of the inlet 58, and crop advanced by one group of tines 106 may advantageously tend to draw with it also that part of the crop which lies adjacent to it but beyond its ends, although this will depend on the nature of the particular crop involved. Furthermore, the mechanism 62 is better balanced dynamically and has less tendency toward vibration.

When the bale core 64 reaches the size of the required bale crop flow to the inlet 58 is stopped and the bale is tied with twine and finally discharged by swinging the gate 38 upwardly.

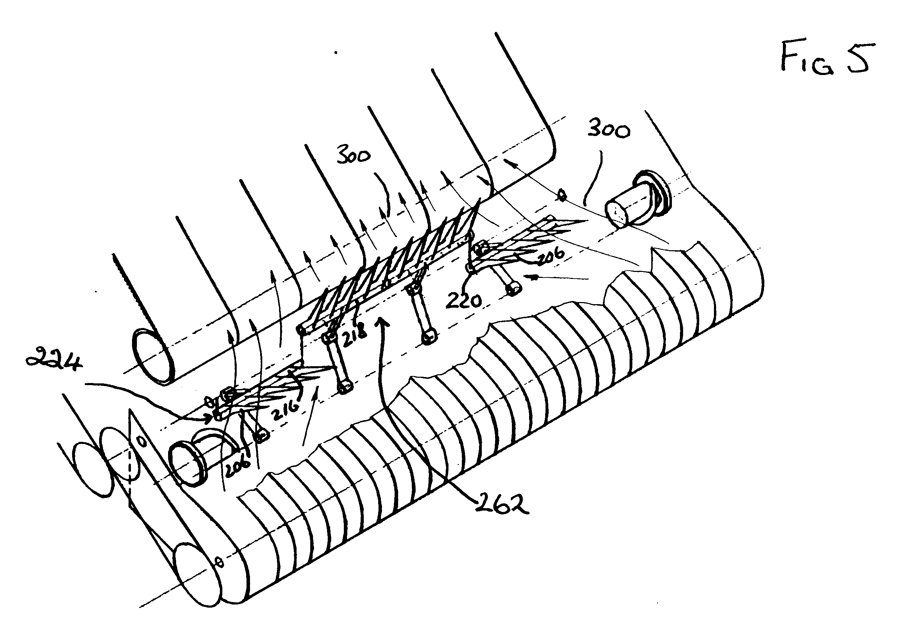

In a further embodiment of the invention having feeder fork mechanism 262 of Figure 5, crankshaft 224 has its crank pins and tubes 216, 218, 220 disposed in substantially the same plane, there being just three such crank pins. Outer tubes 216 and 220 (and crank pins) are of equal length whilst middle tube 218 (and crank pin) is twice the length of the tube 216 or 220. In Figure 5 the tines 206 associated with the tube 218 are at the twelve o'clock position when those on the tubes 216, 220 are at the three o'clock position with the crankshaft 224 moving anti-clockwise when viewed from left of Figure 5.

In Figure 5 the tines 206 on the middle tube 218 feed crop in the central region into the baling chamber 56 whilst those on the outer tubes 216, 220 are retracted. However, some of the crop in the outer regions will be drawn into the central region of flow and the crop tends to converge freely toward this region. The overall flow pattern is indicated by arrows 300 in Figure 5.

On the other hand, when the middle tines are retracted and the outer tines working, crop in the central region is drawn outwardly joining the main flow at the outer regions, with the incoming crop at the outer regions converging freely behind the outer tines.

In this way a simple arrangement is provided affording good balance with smooth operation and regular crop flow.

## Claims

1. A machine for forming cylindrical bales of crop having a baling chamber (56), a pick-up (60) for the crop, and a feeder fork mechanism (62, 262) for receiving the crop from the pick-up (60) and delivering it to the baling chamber (56), the feeder fork mechanism (62, 262) having: crop supporting strippers (94) arranged side-by-side; and crop advancing tines (106, 206) rotatably received on a drivable and rotatable crank and pivotally connected to a pivot arm (132, 134, 136, 138) rotatably received on a shaft (130) for a crop advancing movement from a position adjacent the pick-up (60) to a position adjacent the the baling chamber inlet (58) in which a crop engaging part of the tine (106, 206) extends outwardly between the strippers (94) and for a return movement in which the tine (106, 206) is moved inwardly of the strippers (94) characterised in that the crank is a crankshaft (124, 224) with at least three throws (crank pins 117, 119, 121, 123), each throw rotatably receives a group of tines (106, 206), each group of tines (106, 206) is rigidly attached to a tube (116, 118, 120, 122, 216, 218, 220) rotatably received on the throws (crank pins 117, 119, 121, 123), and each tube (116 etc) is rigidly attached to a second arm (140, 142, 144, 146) pivotally connected to the pivot arm (132, 134, 136, 138) rotatably received on a shaft (130).

2. A machine according to claim 1 characterised in that each crank pin (117, 119, 121, 123) has at least three tines thereon.

3. A machine according to claim 1 or 2 characterised in that the crank pins (117, 119, 121, 123) are disposed at equal angular intervals around the crankshaft (124, 224).

4. A machine according to any of claims 1 or 2 characterised in that the crank pins are disposed in substantially the same plane.

5. A machine according to claim 4 characterised in that the crankshaft (124, 224) has a middle and two equal length outer crank pins, the middle crank pin being twice as long as a said outer crank pin.

## Patentansprüche

1. Maschine zum Formen zylindrischer Gutballen mit einer Ballenkammer (56), einer pick-up (60) für das Gut und einer Fördergabeleinrichtung (62, 262) zum Empfang des Gutes von der pick-up (60) und dessen Abgabe in die Ballenkammer (56), wobei die Fördergabeleinrichtung (62, 262) Gut tragende Abstreifer (94), die nebeneinander angeordnet sind, und Gut fördernde Zinken (106, 206), die drehbar auf einer antreibbaren und drehbaren Kurbel angeordnet und schwenkbar mit einem Schwenkarm (132, 134, 136, 138), der schwenkbar von einer Welle (130) aufgenommen ist, verbunden sind, für eine Gutförderbewegung, in der ein in das Gut fassender Teil des Zinkens (106, 206) sich nach außen zwischen den Abstreifern (94) erstreckt, von einer Stelle nahe der pick-up (60) zu einer Stelle nahe des Ballenkammereinlasses (58) und für eine Rücklaufbewegung aufweist, in der der Zinken (106, 206) ins Innere der Abstreifer (94) versetzt ist, dadurch gekennzeichnet, daß die Kurbel als Kurbelwelle (124, 224) mit wenigstens drei Kröpfungen (Kurbelzapfen 117, 119, 121, 123) ausgebildet ist, jede Kröpfung eine Gruppe von Zinken (106, 206) drehbar aufnimmt, jede Gruppe von Zinken (106, 206) starr an einer Hülse (116, 118, 120, 122, 216, 218, 220), die drehbar von den Kröpfungen (Kurbelzapfen 117, 119, 121, 123) aufgenommen ist, befestigt ist und daß jede Hülse (116 usw.) starr an einen zweiten Arm (140, 142, 144, 146) angeschlossen ist, der schwenkbar mit dem Schwenkarm (132, 134, 136, 138) verbunden ist.

2. Maschine nach Anspruch 1, dadurch gekennzeichnet, daß jeder Kurbelzapfen (117, 119, 121, 123) wenigstens drei Zinken aufnimmt.

3. Maschine nach Anspruch 1 oder 2, dadurch gekennzeichnet, daß die Kurbelzapfen (117, 119, 121, 123) mit gleichen Winkelabständen um die Kurbelwelle (124, 224) herum angeordnet sind.

4. Maschine nach einem der Ansprüche 1 oder 2, dadurch gekennzeichnet, daß die Kurbelzapfen im wesentlichen in derselben Ebene angeordnet sind.

5. Maschine nach Anspruch 4, dadurch gekennzeichnet, daß die Kurbelwelle (124, 224) einen mittigen und zwei gleich lange äußere Kurbelzapfen aufweist, wobei der mittige Kurbelzapfen doppelt so lang wie ein genannter äußerer Kurbelzapfen ist.

## Revendications

1. Machine pour former des balles cylindriques de matière récoltée, comprenant une chambre de formation de balle (56), un dispositif de ramassage (60) pour la matière récoltée, et un mécanisme d'alimentation à fourche (62,262) pour recevoir la matière récoltée venant du dispositif de ramassage (60) et l'envoyer à la chambre de formation de balle (56), le mécanisme d'alimentation à fourche (62,262) comprenant : des bandes de séparation (94) supportant la matière récoltée et placées côte-à-côte ; et des dents d'avance de la matière récoltée (106, 206) reçues de façon tournante sur une manivelle pouvant être entraînée en rotation et reliées de façon pivotante à un bras pivotant (132,134,136,138), reçu de façon tournante sur un arbre (130) pour un mouvement d'avance de la matière récoltée, d'une position adjacente au dispositif de ramassage (60) à une position adjacente à l'entrée (58) de la chambre de formation de balle, dans lequel une partie d'attaque de la matière récoltée des dents (106,206) s'étend vers l'extérieur entre les bandes de séparation (94), et pour un mouvement de retour dans lequel les dents (106,206) sont rétractées du côté intérieur des bandes de séparation (94), caractérisée en ce que la manivelle est un vilebrequin (124,224) comportant au moins trois manetons (117,119,121,123), chaque maneton portant de façon tournante un groupe de dents (106,206), chaque groupe de dents (106,206) est rigidement fixé à un tube (116,118, 120,122,216,218,220) reçu de façon tournante sur les manetons (117,119,121,123) et chaque tube (116,etc.) est rigidement fixé à un deuxième bras (140,142,144,146) relié de façon pivotante audit bras pivotant (132,134, 136,138).

2. Machine suivant la revendication 1, caractérisée en ce que chaque maneton (117,119,121,123) porte au moins trois dents.

3. Machine suivant la revendication 1 ou 2, caractérisée en ce que les manetons (117,119,121,123) sont disposés à intervalles angulaires égaux autour du vilebrequin (124,224).

4. Machine suivant l'une quelconque des revendications 1 ou 2, caractérisée en ce que les manetons sont disposés sensiblement dans le même plan.

5. Machine suivant la revendication 4, caractérisée en ce que le vilebrequin (124,224) comporte un maneton central et deux manetons extérieurs de même longueur, le maneton central étant deux fois plus long qu'un dit maneton extérieur.
